(19) Europäisches Patentamt
European Patent Office
Office européen des brevets

(11) **EP 4 194 144 A1**

(12) **EUROPEAN PATENT APPLICATION**
published in accordance with Art. 153(4) EPC

(43) Date of publication:
**14.06.2023 Bulletin 2023/24**

(21) Application number: **21879716.5**

(22) Date of filing: **28.07.2021**

(51) International Patent Classification (IPC):
**B24B 27/00** *(2006.01)* **B24B 27/033** *(2006.01)*
**B24B 49/12** *(2006.01)* **B24B 49/16** *(2006.01)*
**G05B 19/18** *(2006.01)* **G05B 19/4093** *(2006.01)*
**B23Q 17/24** *(2006.01)*

(52) Cooperative Patent Classification (CPC):
**B23Q 17/24; B24B 27/00; B24B 27/033;
B24B 49/12; B24B 49/16; G05B 19/18;
G05B 19/4093**

(86) International application number:
**PCT/JP2021/027912**

(87) International publication number:
**WO 2022/079974 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.10.2020 JP 2020172981**

(71) Applicant: **JFE Steel Corporation
Tokyo 100-0011 (JP)**

(72) Inventors:
• **WATANABE, Taku
Tokyo 100-0011 (JP)**
• **ISHIDA, Kyohei
Tokyo 100-0011 (JP)**
• **YAMASHITA, Koji
Tokyo 100-0011 (JP)**

(74) Representative: **Haseltine Lake Kempner LLP
Bürkleinstrasse 10
80538 München (DE)**

(54) **DEFECT GRINDING SYSTEM, DEFECT GRINDING METHOD, AND STEEL PRODUCT MANUFACTURING METHOD EMPLOYING SAME**

(57) A flaw grinding system, a flaw grinding method, and a steel-product manufacturing method employing the flaw grinding method are provided that enable automation of the task of grinding a flaw on the surface of a workpiece having a three-dimensional shape, while also reducing the occurrence of faulty grinding such as over-grinding or under-grinding.

A flaw grinding system includes a grinding apparatus, a shape measurement apparatus, a flaw detection apparatus, and a grinding-tool control apparatus. The grinding apparatus includes a grinding tool that grinds a flaw on a surface of a workpiece. The shape measurement apparatus measures a three-dimensional shape and an attitude of the workpiece. The flaw detection apparatus detects a location of the flaw on the workpiece. The grinding-tool control apparatus generates a trajectory of the grinding tool to grind the flaw, based on the three-dimensional shape and the attitude of the workpiece measured by the shape measurement apparatus and based on the location of the flaw detected by the flaw detection apparatus. The grinding-tool control apparatus controls the grinding apparatus in a manner that causes the grinding tool to move along the trajectory.

FIG. 1

**Description**

Technical Field

The present invention relates to a flaw grinding system, a flaw grinding method, and a steel-product manufacturing method employing the flaw grinding method, which grind and remove a flaw or defect on the surface of a workpiece such as a steel product.

Background Art

Steel products such as steel pipes, bar steel, shape steel, and steel ingots (to be referred to as "workpieces" hereinafter) may in some cases have a flaw or defect (to be referred to as "flaw" hereinafter) on their surface due to various factors arising during manufacture. A flaw on the surface of such a workpiece needs to be removed by a rework that involves using a grinder or other tool to grind and level out the flaw with the surroundings of the flaw. Problems with such a rework include: the potential danger associated with the task of the worker manually performing grinding by placing the grinder's rotor against the workpiece; and the working environment where the worker is exposed to vibrations, dust, or other adverse conditions that arise due to grinding. Such a rework also requires extra laborers to perform the rework. A need thus exists for automating the rework.

Unfortunately, steel products serving as workpieces come in a wide variety of types, and in various three-dimensional shapes. Further, the location of a flaw or defect on the surface of such a workpiece tends to vary with the type of the steel product. This means that the steel products are subjected to reworks at various locations and in various attitudes.

With regard to automating a rework on a workpiece, for example, Patent Literature 1 discloses an automatic flaw reworking method and an automatic flaw reworking apparatus. The disclosed method and apparatus involve applying, to the location of a flaw on the surface of the workpiece, a marking that contains information about the nature of the flaw, and detecting the marking and performing information processing to provide an operational command for the automatic flaw reworking apparatus.

Patent Literature 2 discloses an apparatus for automatically grinding a surface flaw on a metallic material. The disclosed apparatus detects the degree of contact of the grinder's grindstone with the metallic material surface, and controls how much cutting is to be done by the grinder's grindstone to a flaw on the metallic material surface.

Further, Patent Literature 3 discloses a robot operation teaching method directed to teaching an operation for a robot that performs marking or rework on a finished product such as a steel pipe or a shape steel. The disclosed method includes: outputting the manufacturing specifications of the finished product from a production management computer; in response to the outputting of the manufacturing specifications, determining, by a control computer, operational information showing location data and task type corresponding to the manufacturing specifications; and in response to the determining of the operational information, teaching, by a robot controller, an operation for the robot.

Citation List

Patent Literature

    Patent Literature 1: Japanese Unexamined Patent Application Publication No. 7-9320
    Patent Literature 2: Japanese Examined Patent Application Publication No. 5-41388
    Patent Literature 3: Japanese Unexamined Patent Application Publication No. 1-166105

Summary of Invention

Technical Problem

The techniques disclosed in Patent Literatures 1 and 2 are directed to flat-shaped workpieces such as steel sheets with a flat surface to be ground. This means that if the techniques disclosed in Patent Literatures 1 and 2 are applied to a workpiece having a three-dimensional shape with a curved surface, such as a steel pipe, due to the curved shape of the surface to be ground, the angle of the grindstone with respect to the surface of the workpiece, or the direction of the reaction force to the grinding performed by pressing of the grindstone changes during grinding. This may lead to malfunction of the grinding apparatus due to interference between the grindstone and the workpiece, or faulty grinding such as over-grinding or under-grinding.

The technique disclosed in Patent Literature 3 teaches an operation for the robot by acquiring, from an external computer, information such as the model of a workpiece or the manufacturing specifications for its dimensions. In the actual workpiece rework, however, dimension errors of the workpiece itself, or variations in, for example, the placement location or attitude of the workpiece exist. This may cause problems such as malfunction of the grinding apparatus due to interference between the robot arm or the grindstone and the workpiece, or faulty grinding due to the grindstone not following an intended target trajectory with respect to the surface of the workpiece.

When a worker is to manually perform a rework, the worker visually inspects the actual workpiece for the errors or variations mentioned above, presses the grinder with a suitable pressure against the location of a flaw on the surface of the workpiece, and moves the grinder in such a way as to level out the flaw with the surroundings of the flaw. The worker then stops the pressing of the grinder at a suitable timing, visually judges whether any flaw remains, and determines whether the worker needs to perform re-grinding or can now finish the rework. An analysis of such a manual rework reveals that the rework proceeds with the following procedure: (1) measuring the shape and attitude of the actual workpiece based on visual information; (2) pressing the grinder's grindstone against the flaw location; (3) sensing the grinding reaction force/load, and based on the result of the sensing, adjusting the force with which to press the grindstone; and (4) based on visual information, inspecting the surface of the workpiece after grinding of the flaw is performed.

Accordingly, the inventors of the present application have investigated on the possibility of, in performing a rework involving grinding a flaw on the surface of a workpiece having a three-dimensional shape, reducing the occurrence of faulty grinding such as over-grinding or under-grinding through automatic execution of a procedure described below. The inventors have thus arrived at the present invention. The procedure includes: (1) measuring the shape and attitude of the actual workpiece with a camera or a shape sensor; (2) detecting the location of the flaw on the workpiece; (3) generating an operation of pressing the grinder's grindstone against the location of the flaw; (4) measuring and controlling the grinding reaction force/load on the grinder; and (5) inspecting the surface of the workpiece after grinding of the flaw is performed, and determining whether re-grinding is required.

The present invention has been made in view of the above-mentioned circumstances. Accordingly, it is an object of the present invention to provide a flaw grinding system, a flaw grinding method, and a steel-product manufacturing method employing the flaw grinding method that enable automation of the task of grinding a flaw on the surface of a workpiece having a three-dimensional shape, while also reducing the occurrence of faulty grinding such as over-grinding or under-grinding.

Solution to Problem

The means for accomplishing the above-mentioned object is presented as follows.

[1] A flaw grinding system including: a grinding apparatus including a grinding tool that grinds a flaw on a surface of a workpiece; a shape measurement apparatus that measures a three-dimensional shape and an attitude of the workpiece; a flaw detection apparatus that detects a location of the flaw on the workpiece; and a grinding-tool control apparatus that, based on the three-dimensional shape and the attitude of the workpiece measured by the shape measurement apparatus and based on the location of the flaw detected by the flaw detection apparatus, generates a trajectory of the grinding tool to grind the flaw, and controls the grinding apparatus in a manner that causes the grinding tool to move along the trajectory.

The term "flaw" mentioned above is meant to include surface defects that cause no change in the shape of the surface of the workpiece.

[2] The flaw grinding system according to the item [1], further including a grinding-reaction-force measurement apparatus that measures a grinding reaction force, the grinding reaction force being a force exerted on the grinding tool from the workpiece in reaction to grinding, in which the grinding-tool control apparatus corrects the trajectory based on the grinding reaction force measured by the grinding-reaction-force measurement apparatus, and controls the grinding apparatus in a manner that causes the grinding tool to move along the trajectory that has been corrected.

[3] The flaw grinding system according to the item [1] or [2], further including an inspection apparatus that, after grinding of the flaw is performed by the grinding apparatus, inspects the surface of the workpiece at the location of the flaw.

[4] A flaw grinding method including: a shape measurement step of measuring a three-dimensional shape and an attitude of a workpiece; a flaw detection step of detecting a location of a flaw on a surface of the workpiece; and a grinding step of, based on the three-dimensional shape and the attitude of the workpiece measured in the shape measurement step and based on the location of the flaw detected in the flaw detection step, generating a trajectory of a grinding tool that grinds the flaw, and grinding the flaw by moving the grinding tool along the trajectory.

[5] The flaw grinding method according to the item [4], in which the grinding step includes measuring a grinding reaction force, correcting the trajectory based on the grinding reaction force, and grinding the flaw by moving the grinding tool along the trajectory that has been corrected, the grinding reaction force being a force exerted on the grinding tool from the workpiece in reaction to grinding.

[6] The flaw grinding method according to the item [4] or [5], further including an inspection step of, after the grinding step, inspecting the surface of the workpiece at the location of the flaw.

[7] A steel-product manufacturing method including grinding a flaw on a surface of a steel product by use of the flaw grinding method according to any one of the items [4] to [6], the steel product being the workpiece.

Advantageous Effects of Invention

The flaw grinding system, the flaw grinding method, and the steel-product manufacturing method employing the flaw grinding method according to the present invention enable automation of the task of grinding a flaw on the surface of a workpiece having a three-dimensional shape, while also reducing the occurrence of faulty grinding such as over-grinding or under-grinding.

Brief Description of Drawings

[Fig. 1] Fig. 1 illustrates a general configuration of a flaw grinding system according to the present invention.

[Fig. 2] Fig. 2 illustrates an example of grinding of a flaw by the flaw grinding system according to the present invention.

[Fig. 3] Fig. 3 illustrates another example of grinding of a flaw by the flaw grinding system according to the present invention.

[Fig. 4] Fig. 4 illustrates an example of detection of a flaw by a flaw detection apparatus of the flaw grinding system according to the present invention.

[Fig. 5] Fig. 5 illustrates another example of detection of a flaw by the flaw detection apparatus of the flaw grinding system according to the present invention.

[Fig. 6] Fig. 6(a) to Fig.6(c) illustrate a procedure for measuring the three-dimensional shape of a workpiece by a shape measurement apparatus of the flaw grinding system according to the present invention.

[Fig. 7] Fig. 7 illustrates a procedure for generating a trajectory of a grinding tool by the flaw grinding system according to the present invention.

[Fig. 8] Fig. 8 illustrates a procedure for generating a trajectory of the grinding tool by the flaw grinding system according to the present invention.

[Fig. 9] Fig. 9 illustrates a procedure for generating a trajectory of the grinding tool by the flaw grinding system according to the present invention.

[Fig. 10] Fig. 10 illustrates a procedure for generating a trajectory of the grinding tool by the flaw grinding system according to the present invention.

[Fig. 11] Fig. 11(a) and Fig. 11(b) illustrate an example of correction of a trajectory of the grinding tool by the flaw grinding system according to the present invention.

Description of Embodiments

Referring now to the drawings, a flaw grinding system, a flaw grinding method, and a steel-product manufacturing method employing the flaw grinding method according to an embodiment of the present invention are described in detail.

As used in the following description of the embodiment, the term "flaw" is meant to include not only flaws such as protruding flaws due to deposition of foreign matter or other causes and recessed flaws due to surface loss or other causes, but also surface defects or other defects that do not cause changes in the shape of the surface of a workpiece. The expression "grind a flaw" is used to mean removing a flaw to level out the surface of a workpiece. For a protruding flaw, this means grinding the flaw to level out the surface of the workpiece. For a recessed flaw, this means grinding the surroundings of the flaw to level out the surface of the workpiece.

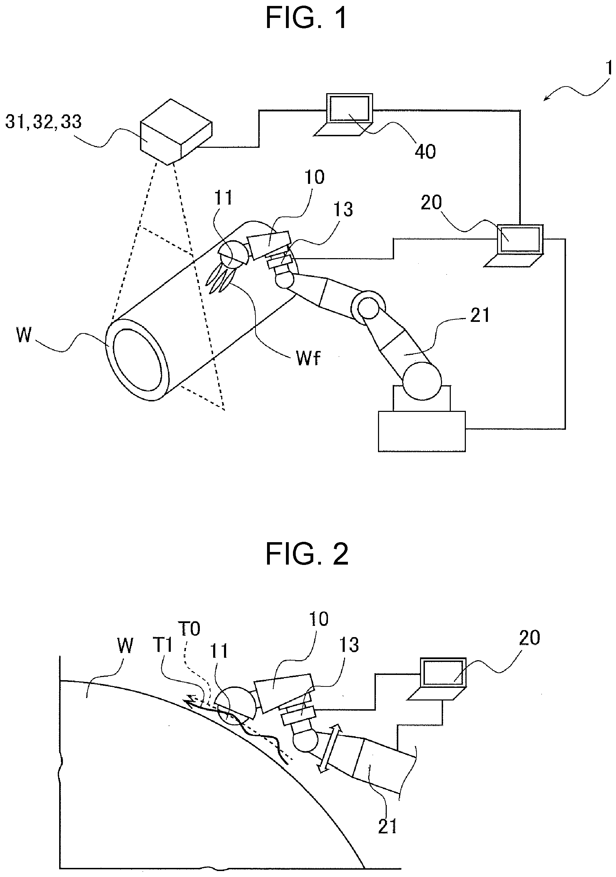

Fig. 1 illustrates a general configuration of a flaw grinding system 1 according to the embodiment. As illustrated in Fig. 1, the flaw grinding system 1 according to the embodiment includes a grinder (an example of a grinding apparatus) 10, and a grinding robot 21. The grinder 10 includes a grindstone (an example of a grinding tool) 11 that grinds a flaw Wf on the surface of a workpiece W. The grinding robot 21 operates the grinder 10. The flaw grinding system 1 also includes a laser rangefinder (an example of a shape measurement apparatus/flaw detection apparatus) 31 that measures the shape of the workpiece W, and a camera (an example of a flaw detection apparatus/inspection apparatus) 32 that captures an image of the surface of the workpiece W. A reaction-force meter (an example of a grinding-reaction-force measurement apparatus) 13 is attached to an arm portion of the grinding robot 21 that supports the grinder 10. The reaction-force meter 13 measures a grinding reaction force, which is a force exerted on the grinder 10 from the workpiece W in reaction to grinding.

As illustrated in Fig. 1, the laser rangefinder 31 is a two-dimensional laser rangefinder that measures the cross-sectional shape of the workpiece W. The laser rangefinder 31 is installed in a manner that allows the laser rangefinder 31 to be actuated by a uniaxial actuator 33 described later. The workpiece W is disposed along the uniaxial actuator 33, and the workpiece W is scanned with the laser rangefinder 31 actuated by the uniaxial actuator 33. In this way, a shape measurement step, which is a step of measuring the three-dimensional shape and the attitude of the workpiece W, is performed. The laser rangefinder 31 is also capable of, through an operation similar to that mentioned above, performing a flaw detection step of detecting the location of the flaw Wf on the workpiece W, and an inspection step of, after the flaw Wf is ground by the grinder 10, inspecting the surface of the workpiece W at the location of the flaw Wf. The attitude of the workpiece W refers to the location and orientation of the workpiece W with reference to the uniaxial actuator 33.

The camera 32 is installed, together with the laser rangefinder 31, in a manner that allows the camera 32 to be actuated by the uniaxial actuator 33. By capturing an image of the surface of the workpiece W, the camera, together with the laser rangefinder 31 or instead of the laser rangefinder 31, performs a flaw detection step of detecting the location of the flaw Wf on the workpiece W, and an inspection step of, after the flaw Wf is ground by the grinder 10, inspecting the surface of the workpiece W at the location of the flaw Wf. If no inspection step is to be performed, or if the flaw detection step is to be performed by the laser rangefinder 31, the flaw grinding system 1 may not have to include the camera 32.

The respective operations of the grinder 10 and the grinding robot 21 are controlled by a grinding-tool control PC (an example of a grinding-tool control apparatus) 20, which is implemented by a computer. The respective operations of the laser rangefinder 31, the camera 32, and the uniaxial actuator 33 are controlled by a shape measurement/flaw detection PC (an example of a shape measurement apparatus/flaw detection apparatus) 40, which is implemented by a general-purpose personal computer.

Fig. 2 illustrates an example of grinding of a flaw by the flaw grinding system 1 according to the embodiment. The grinding-tool control PC 20 performs a grinding step of grinding the flaw Wf on the surface of the workpiece W. Specifically, based on the three-dimensional shape and the attitude of the workpiece W that have been measured by the laser rangefinder 31 illustrated in Fig. 1, and the location of the flaw Wf (see Fig. 1) that has been detected by the laser rangefinder 31 or the camera 32, the grinding-tool control PC 20 generates a trajectory T0 (see Fig. 2) to be followed by a grindstone 11 of the grinder 10 to grind the flaw Wf. The grinding-tool control PC 20 also controls operation of the grinding robot 21 in such a way that the grindstone 11 moves along the trajectory T0.

As described above, while the flaw Wf is ground with the grinder 10, the reaction-force meter 13 measures a grinding reaction force exerted on the grinder 10 from the workpiece W. As illustrated in Fig. 2, the grinding-tool control PC 20 performs a feedback control of the grinding robot 21. That is, based on the grinding reaction force measured by the reaction-force meter 13, the grinding-tool control PC 20 corrects the trajectory T0 of the grindstone 11, and operates the grinding robot 21 in such a way that the grindstone 11 moves along a corrected trajectory T1 obtained by correcting the trajectory T0. In this case, the trajectory T0 of the grindstone 11 is corrected by means of the grinding robot 21 by adjusting the location of the grinder 10 and thus changing the height of the grindstone 11 from the surface of the workpiece W.

Specifically, as illustrated in Figs. 1 and 2, with the grinding robot 21 operated by the grinding-tool control PC 20, the grindstone 11 of the grinder 10 is pressed against the location of the flaw Wf detected by the laser rangefinder 31 or the camera 32, and the grindstone 11 is moved along the trajectory T0 to thereby start grinding of the flaw Wf. The grinding-tool control PC 20 then corrects the trajectory T0 of the grindstone 11 by performing an inverse kinematics calculation such that the grinding reaction force measured by the reaction-force meter 13 during grinding of the flaw Wf is made to approach a predetermined target value. Subsequently, the grinding-tool control PC 20 operates the grinding robot 21 in a manner that causes the grindstone 11 to move along the corrected trajectory T1, that is, in a manner that causes the grindstone 11 to press further against the flaw Wf or causes the grindstone 11 to move away from the flaw Wf.

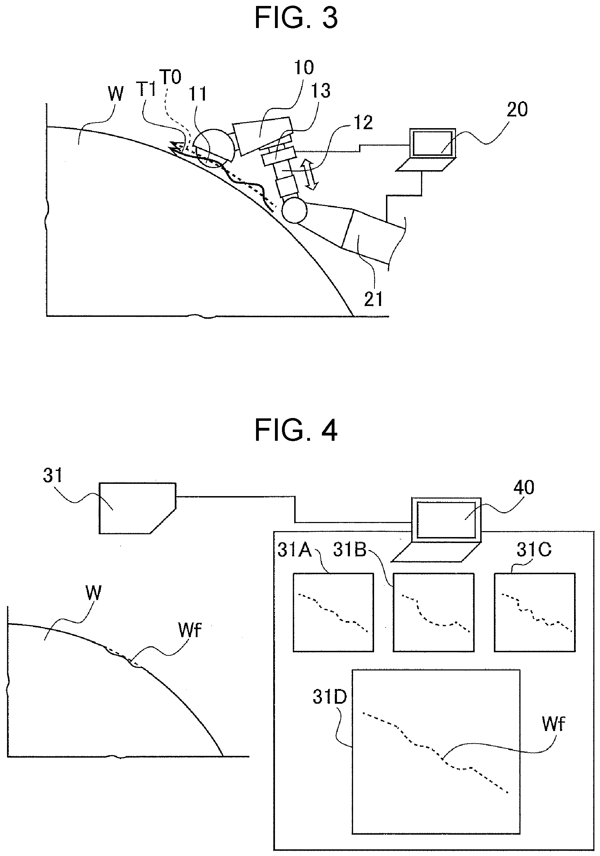

Alternatively, as illustrated in Fig. 3, in addition to the reaction-force meter 13, an actuator (an example of a grinding-tool control apparatus) 12 capable of extending and contracting motion may be added to the arm portion of the grinding robot 21 that supports the grinder 10. In this case, upon correction of the trajectory T0 of the grindstone 11 based on the grinding reaction force measured by the reaction-force meter 13, the height of the grindstone 11 from the surface of the workpiece W can be changed through operation of the actuator 12. This makes it possible to achieve a feedback control similar to that mentioned above.

As illustrated in Fig. 3, the arm portion of the grinding robot 21 is additionally provided with the actuator 12 that adjusts the height of the grindstone 11. This makes it possible to individually correct the trajectory T0 of the grindstone 11 in the direction of height, and the trajectory T0 of the grindstone 11 in a direction different from the direction of height. This allows for improved distribution of the computational processing to be performed by the grinding-tool control PC 20, in comparison to a configuration in which the trajectory T0 of the grindstone 11 is corrected solely through operation of the grinding robot 21 as illustrated in Fig. 2. This helps to avoid imposition of a large computational load on the grinding-tool control PC 20, and consequently enables fast correction of the trajectory T0.

Fig. 4 illustrates an example of a method for detecting the flaw Wf on the surface of the workpiece W by the flaw grinding system 1 according to the embodiment. The shape measurement/flaw detection PC 40 detects the flaw Wf based on the three-dimensional shape of the workpiece W measured by the laser rangefinder 31. For example, the shape measurement/flaw detection PC 40 performs pattern matching as illustrated in Fig. 4. That is, the shape measurement/flaw detection PC 40 compares shape data 31D, which has been measured by the laser rangefinder 31, with flaw shape data 31A to 31C, which are pieces of flaw shape data pre-stored on the shape measurement/flaw detection PC 40. If the similarity between the shape data 31D and one of the pieces of flaw shape data 31A to 31C is greater than or equal to a predetermined reference value, the shape measurement/flaw detection PC 40 detects the presence of the flaw Wf within the range represented by the shape data 31D.

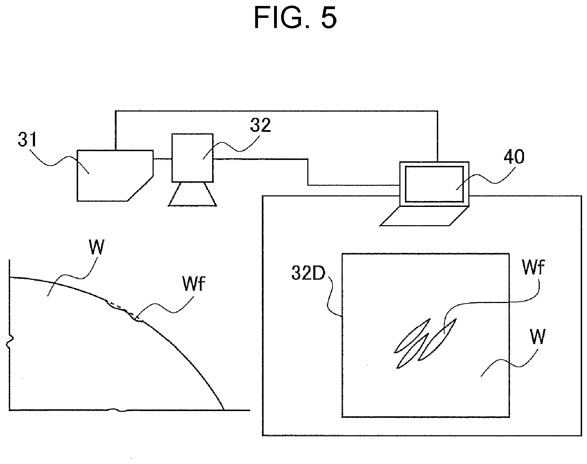

Alternatively, as illustrated in Fig. 5, the flaw Wf may be detected based on image data 32D of the workpiece W captured with the camera 32. This method can be effectively employed for cases where the flaw Wf on the surface of the workpiece W is complex in shape or has irregularities with a size less than that measurable with the measurement accuracy of the laser rangefinder 31. As illustrated in Fig. 5, the shape measurement/flaw detection PC 40 acquires the image data 32D by capturing an image of the surface of the workpiece W with the camera 32, and performs image analysis processing on the image data 32D. In this way, the shape measurement/flaw detection PC 40 is able to detect the presence of the flaw Wf within the range represented by the image data 32D.

A still another exemplary method for detecting the flaw Wf on the workpiece W is to attach a flaw detector such as an eddy-current flaw detector or ultrasonic flaw detector to the tip of the arm of the grinding robot 21. In this case, the flaw Wf can be detected by, based on the three-dimensional shape and the attitude of the workpiece W measured with the laser rangefinder 31, moving the flaw detector along the surface of the workpiece W.

Alternatively, the detection of the flaw Wf by the shape measurement/flaw detection PC 40 may be combined with a judgement made by the worker. For example, an image of the surface of the workpiece W captured with the camera 32 is displayed on the screen of the shape measurement/flaw detection PC 40, and this is visually checked by the worker. If the flaw Wf is confirmed to exist, the flaw Wf may be detected by the worker operating the shape measurement/flaw detection PC 40 and specifying the location of the flaw Wf on the image.

As described above, for each individual workpiece W, the three-dimensional shape and the attitude of the workpiece W are measured with the laser rangefinder 31 to enable real-time generation of a machining trajectory based on information about the actual workpiece W. This configuration obviates the need to prepare 3D data of the workpiece W in advance and, in comparison to generating a machining trajectory from 3D data, allows various variations present in the actual workpiece W to be automatically reflected on the machining trajectory.

As for the detection of the flaw Wf as well, directly measuring the flaw Wf present on the actual workpiece W makes it possible to detect not only the location of the flaw Wf on the workpiece W, but also information such as the size, angle, and depth of the flaw Wf, and further, information about the surface of the workpiece W in the surroundings of the flaw Wf.

With the respective operations of the grinder 10 and the grinding robot 21 controlled by the grinding-tool control PC 20, the flaw Wf is ground for a predetermined time or a predetermined amount, and then an inspection step is performed. This specifically involves, after performing grinding of the flaw Wf, inspecting the surface of the workpiece W with the laser rangefinder 31 or the camera 32 to check whether the flaw Wf remains. Similar to the flaw detection step described above, the inspection step may be performed remotely by analyzing the shape data 31D of the workpiece W measured with the laser rangefinder 31 or the image data 32D of the surface of the workpiece W captured with the camera 32. The inspection step may be performed directly by use of an eddy-current flaw detector, an ultrasonic flaw detector, or other such flaw detector that is attached to the tip of the arm of the grinding robot 21.

The inspection of the surface of the workpiece W subsequent to grinding of the flaw Wf may be performed by using the same apparatus (i.e., the laser rangefinder 31 or the camera 32) used for the detection of the flaw Wf prior to grinding of the flaw Wf, or may be performed by use of a different apparatus. Using the same apparatus makes it possible to reduce the number of components of the flaw grinding system 1. The flaw Wf remaining on the workpiece W after grinding of the flaw Wf is performed is more difficult to detect than is the flaw Wf present before grinding of the flaw Wf is performed. Even in such cases, using a different apparatus, for example, using an apparatus with a higher accuracy than that used for detection of the flaw Wf prior to performing grinding of the flaw Wf allows for more accurate inspection of whether the flaw Wf remains on the surface of the workpiece W after grinding of the flaw Wf is performed.

If the flaw Wf remains, grinding is performed again. If no flaw Wf remains, grinding is ended.

Further, a steel-product manufacturing method according to the embodiment includes the step of grinding a flaw on the surface of a steel product serving as a workpiece by use of the flaw grinding method described above.

Example

Reference is now made to the flaw grinding system, the flaw grinding method, and the steel-product manufacturing method employing the flaw grinding method according to a specific example of the present invention. According to the present example, a steel pipe with a diameter of 50 mm to 600 mm serves as the workpiece W, and the flaw Wf on its surface is removed by grinding.

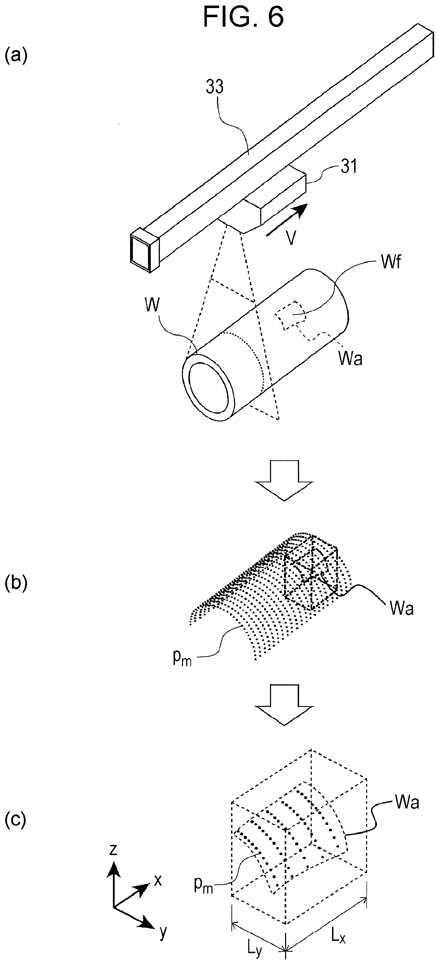

Fig. 6(a) to Fig.6(c) illustrate a procedure for measuring the three-dimensional shape of the workpiece W by the flaw grinding system 1 according to the present example.

As illustrated in Fig. 6(a), the uniaxial actuator 33 is disposed above the workpiece W so as to extend in the longitudinal direction of the workpiece W. Further, the laser rangefinder 31 is installed so as to operate in conjunction with the uniaxial actuator 33. The measurement plane for measuring the cross-sectional shape of the workpiece W by the laser rangefinder 31 is set to be orthogonal to the direction in which the uniaxial actuator 33 moves. In the following description, the direction in which the uniaxial actuator 33 moves will be defined as x-axis, and the directions of width (horizontal direction) and height (vertical direction) of the measurement plane for measuring the cross-sectional shape of the workpiece W by the laser rangefinder 31 will be respectively defined as y-axis and z-axis.

While the laser rangefinder 31 is moved in the x-direction at a velocity V (mm/s) with the uniaxial actuator 33 operated by the shape measurement/flaw detection PC40 (see Fig. 1), the three-dimensional shape and the attitude of the workpiece W are measured at a predetermined sampling frequency $f_s$ (Hz). As a result, as illustrated in Fig. 6(b), a group of three-dimensional shape data points is obtained, which includes an arrangement, in the x-direction and at a predetermined measurement pitch $\Delta x$ (mm), of a group of two-dimensional shape data points representing a set of measured points $p_m$ obtained through measurement of the cross-sectional shape of the workpiece W by the laser rangefinder 31 at each location. At this time, the measurement pitch $\Delta x$ in the x-direction is given as Equation (1) below.

$$\Delta x = V/f_s \ \dots \ (1)$$

The velocity V and the sampling frequency $f_s$ of the laser rangefinder 31 are set so that the measurement pitch $\Delta x$ is within a range of 0.1 mm to 5.0 mm. The velocity V of the laser rangefinder 31 is selected as appropriate within a range of 10 mm/s to 1000 mm/s in accordance with the characteristics of the laser rangefinder 31 and the characteristics of the uniaxial actuator 33. This is because too high a velocity V of the laser rangefinder 31 leads to reduced measurement accuracy due to vibration of the laser rangefinder 31 during operation, whereas too low a velocity V leads to extended measurement time. The sampling frequency $f_s$ of the laser rangefinder 31 is set to be within a range of 10 Hz to 10 kHz, based on the relationship between the velocity V of the laser rangefinder 31 and the measurement pitch $\Delta x$ in the x-direction. The operation of the laser rangefinder 31 is set so that the measurement pitch $\Delta y$ in the y-direction is within a range of 0.1 mm to 5.0 mm.

From the group of shape data points, the location of the flaw Wf is detected by the above-mentioned method illustrated in Fig. 4. Then, a range within which the surface of the workpiece W is to be ground with the grindstone 11 (to be referred to as "grinding range Wa" hereinafter) is set as to contain the flaw Wf, and the measured points $p_m$ present within the grinding range Wa are extracted. The grinding range Wa is set to have a length $L_x$ (mm) in the x-direction and a length $L_y$ (mm) in the y-direction that are greater than the corresponding dimensions of the flaw Wf.

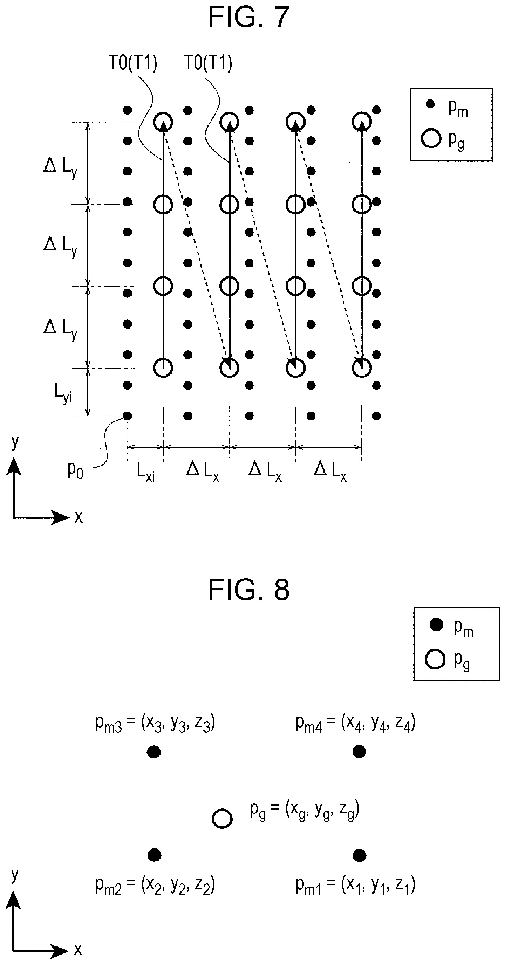

Figs. 7 to 10 illustrate a procedure for generating the trajectory T0 of the grinding tool (grindstone) 11 by the grinding-tool control PC of the flaw grinding system 1 according to the present example.

Fig. 7 illustrates a projection of the measured points $p_m$ within the grinding range Wa onto the xy-plane. The measured points $p_m$ within the grinding range Wa are arranged in the x-direction at an interval $\Delta x$ and in the y-direction at an interval $\Delta y$.

First, multiple target grinding points $p_g$ are set based on a group of shape data points representing a set of measured points $p_m$ present within the grinding range Wa. The target grinding points $p_g$ are points through which the trajectory T0 (T1) of the grindstone 11 is to pass in grinding the flaw Wf on the surface of the workpiece W as the grindstone 11 is moved while being pressed against the workpiece W. As the direction in which to move the grindstone 11 during grinding of the flaw Wf (to be referred to as "grinding direction" hereinafter), which represents one condition of a grinding process, either the x-direction or the y-direction can be selected. In the present example, the grindstone 11 is moved in the y-direction.

Then, as illustrated in Fig. 7, within the grinding range Wa, grinding is performed by moving the grindstone 11 along the trajectory T0 (T1) representative of the grinding direction with the grindstone 11 pressed against the workpiece W. Such grinding is repeated at predetermined intervals in a direction orthogonal to the grinding direction to thereby grind the entire grinding range Wa.

Of the measured points $p_m$ present within the grinding range Wa, the point with the smallest coordinate values in the x- and y-directions is defined as a measurement origin $p_0$. Then, with reference to the measurement origin $p_0$, the location $L_{xi}$ (mm), $L_{yi}$ (mm) of a grinding origin $p_{g0}$ in the x- and y-directions is set. The grinding origin $p_{g0}$ represents the location at which to start grinding by the grindstone 11. The location $L_{xi}$, $L_{yi}$ of the grinding origin $p_{g0}$ in the x- and y-directions is set to be less than or equal to approximately 1/10 of the lengths $L_x$ and $L_y$ of the grinding range Wa in the x- and y-directions.

Further, the intervals $\Delta L_x$(mm) and $\Delta L_y$(mm) between target grinding points $p_g$ in the x- and y-directions are set. The interval between target grinding points $p_g$ in the grinding direction ($\Delta L_y$ in the present example) is set in accordance with, for example, the radius of curvature of the workpiece W in the grinding direction. The above-mentioned interval is preferably set within a range of 0.5 mm to 20 mm. Making the interval between multiple trajectories T0 (T1) ($\Delta L_x$ in the present example) less than the width of grinding by the grindstone 11 helps to prevent the flaw Wf from remaining unground. The number N of target grinding points $p_g$ in the x-direction, and the number M of target grinding points $p_g$ in the y-direction are respectively given by Equations (2) and (3) below.

$$N = (L_x - L_{xi})/\Delta L_x \ \dots \ (2)$$

$$M = (L_y - L_{yi})/\Delta L_y \ \dots \ (3)$$

The number of target grinding points $p_g$, which is determined in accordance with the size of the flaw Wf, the radius of curvature of the workpiece W in the grinding direction, or other factors, is set within a range of 10 to 100. The above range is set because an excessively large number of target grinding points $p_g$ may lead to increased computational load on the grinding-tool control PC and consequently increased cycle time. The above range is set also because an excessively small number of target grinding points $p_g$ may result in the grinder 10 experiencing, as the grinder 10 moves between target grinding points $p_g$, a greater grinding reaction force from the workpiece W than is expected, which may lead to unstable control of the grinding reaction force. The location $x_g$ (mm), $y_g$ (mm) of each individual target grinding point $p_g$ in the x- and y-directions is thus determined as described above.

Reference is now made to Fig. 8 to describe a procedure for determining the location of a target grinding point $p_g$ in the z-direction. If the location ($x_g$, $y_g$) of a given target grinding point $p_g$ ($x_g$, $y_g$, $z_g$) in the x- and y-directions is known, the location $z_g$ (mm) of the target grinding point $p_g$ in the z-direction is given as Equation (4) below from the four measured points $p_{m1}(x_1, y_1, z_1)$, $p_{m2}(x_2, y_2, z_2)$, $p_{m3}(x_3, y_3, z_3)$, and $p_{m4}(x_4, y_4, z_4)$ that are located closest to the target grinding point $p_g$, and from the location ($x_g$, $y_g$) of the target grinding point $p_g$ in the x- and y-directions.
[Math. 1]

$$z_g = \frac{\sum_{k=1}^{4}\{|x_k - x_g| + |y_k - y_g|\}z_k}{4} \quad \cdots \ (4)$$

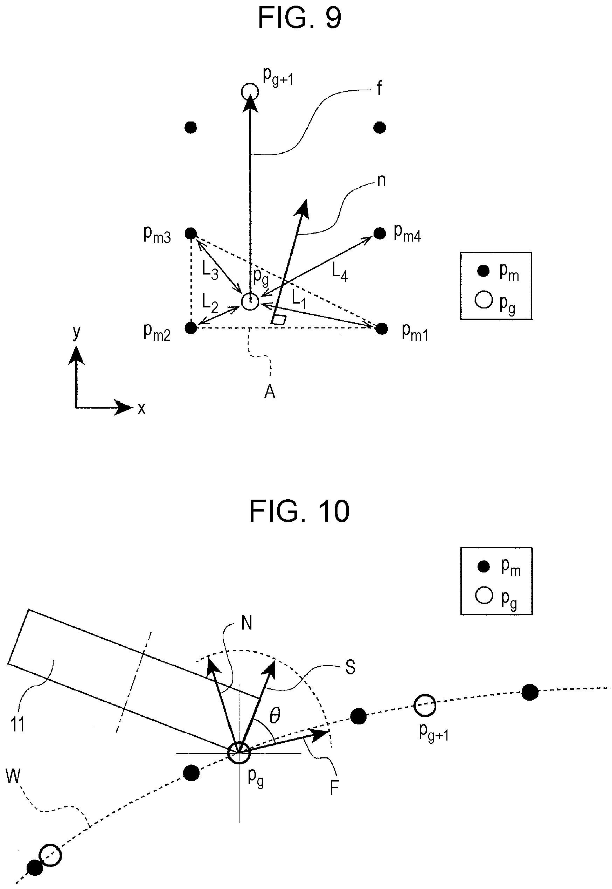

Reference is now made to Fig. 9 to describe a procedure for determining a normal vector n, which serves as a reference for controlling the attitude of the grindstone 11 along the trajectory T0 (T1). As with Fig. 8, for the four measured points $p_{m4}$, $p_{m3}$, $p_{m3}$, and $p_{m4}$ that are located closest to a given target grinding point $p_g$, their respective distances $L_4$ to $L_4$ from the target grinding point $p_g$ are given as Equation (5). Then, from among the four measured points $p_{m4}$, $p_{m2}$, $p_{m3}$, and $p_{m4}$ at the distances $L_4$ to $L_4$ from the target grinding point $p_g$, three points are selected in order from least to greatest distance from the target grinding point $p_g$.
[Math. 2]

$$L_k = \sqrt{(x_g - x_k)^2 + (y_g - y_k)^2 + (z_g - z_k)^2}_{\ k=1\sim 4} \quad \cdots \ (5)$$

The three points thus selected are defined as $p_{p1}(x_{p1}, y_{p1}, z_{p1})$, $p_{p2}(x_{p2}, y_{p2}, z_{p2})$, and $p_{p3}(x_{p3}, y_{p3}, z_{p3})$. Then, the x-, y-, and z-direction components p (mm), q (mm), and r (mm) of the normal vector n in a virtual plane A in which these three points exist are respectively given as Equations (6) to (8) below.

$$p = (y_{p2} - y_{p1})(z_{p3} - z_{p1}) - (y_{p3} - y_{p1})(z_{p3} - z_{p1}) \ \dots \ (6)$$

$$q = (z_{p2} - z_{p1})(x_{p3} - x_{p1}) - (z_{p3} - z_{p1})(x_{p3} - x_{p1}) \ \dots \ (7)$$

$$r = (x_{p2} - x_{p1})(y_{p3} - y_{p1}) - (x_{p3} - x_{p1})(y_{p3} - y_{p1}) \ \dots \ (8)$$

Subsequently, an inter-target-grinding-point vector f($a_f$, $b_f$, $c_f$), which is a directional vector between target grinding points $p_g$, is determined. The x-, y-, and z-direction components $a_f$ (mm), $b_f$ (mm), and $c_f$ (mm) of the inter-target-grinding-point vector f that points from the target grinding point $p_g$ to the next target grinding point $p_{g+1}$ ($x_{g+1}$, $y_{g+1}$, $z_{g+1}$) are respectively given as Equations (9) to (11) below.

$$a_f = x_{g+1} - x_g \quad \ldots \quad (9)$$

$$b_f = y_{g+1} - y_g \quad \ldots \quad (10)$$

$$c_f = z_{g+1} - z_g \quad \ldots \quad (11)$$

Then, the normal vector n in the virtual plane A, and the inter-target-grinding-point vector f are non-dimensionalized into a non-dimensionalized normal vector N and a non-dimensionalized inter-target-grinding-point vector F. The x-, y-, and z-direction components P, Q, and R of the non-dimensionalized normal vector N, and the x-, y-, and z-direction components $A_f$, $B_f$, and $C_f$ of the non-dimensionalized inter-target-grinding-point vector F are respectively given as Equations (12) to (17) below.

[Math. 3]

$$P = \frac{p}{\sqrt{p^2 + q^2 + r^2}} \quad \cdots \quad (12)$$

[Math. 4]

$$Q = \frac{q}{\sqrt{p^2 + q^2 + r^2}} \quad \cdots \quad (13)$$

[Math. 5]

$$R = \frac{r}{\sqrt{p^2 + q^2 + r^2}} \quad \cdots \quad (14)$$

[Math. 6]

$$A_f = \frac{a_f}{\sqrt{a_f^2 + b_f^2 + c_f^2}} \quad \cdots \quad (15)$$

[Math. 7]

$$B_f = \frac{b_f}{\sqrt{a_f^2 + b_f^2 + c_f^2}} \quad \cdots \quad (16)$$

[Math. 8]

$$C_f = \frac{c_f}{\sqrt{a_f^2 + b_f^2 + c_f^2}} \quad \cdots \quad (17)$$

Referring now further to Fig. 10, a procedure for determining the attitude of the grindstone 11 is described. Fig. 10 illustrates the tip of the grindstone 11 in contact with a target grinding point $p_g$. The attitude of the grindstone 11 of the grinder 10 can be defined as a grindstone attitude vector S that is a unit vector parallel to a rotation axis 11X of the grindstone 11. Since the grindstone attitude vector S is (1) coplanar with the non-dimensionalized normal vector N and the non-dimensionalized inter-target-grinding-point vector F, and (2) makes a certain angle $\theta(°)$ with the non-dimensionalized inter-target-grinding-point vector F, the grindstone attitude vector S is given as Equations (18) to (20) below.

[Math. 9]

$$\vec{S} = t\vec{F} + s\vec{N} \quad \cdots (18)$$

$$\cos\theta = A_f \cdot A_s + B_f \cdot B_s + C_f \cdot C_s \quad \ldots (19)$$

$$\cos\alpha = A_s \cdot P + B_s \cdot Q + C_s \cdot R \quad \ldots (20)$$

In the above equations, t and s are real numbers, $A_s$, $B_s$, and $C_s$ are the x-, y-, and z-direction components of the grindstone attitude vector S, $\alpha$ is an angle $\alpha(°)$ made by the grindstone attitude vector S and the non-dimensionalized normal vector N.

The angle $\alpha(°)$ made by the grindstone attitude vector S and the non-dimensionalized normal vector N is given as Equation (21) below.

[Math. 10]

$$\alpha = cos^{-1}\left(\frac{\vec{F}\cdot\vec{N}}{|\vec{F}|\cdot|\vec{N}|}\right) - \theta \quad \cdots (21)$$

Equations (18) to (21) are combined into a system of equations represented by Equation (22). Solving the system of equations represented by Equation (22) gives the respective values of the x-, y-, and z-direction components $A_s$, $B_s$, and $C_s$ of the grindstone attitude vector S.

[Math. 11]

$$\begin{pmatrix} 1 & 0 & 0 & -A_f & -P \\ 0 & 1 & 0 & -B_f & -Q \\ 0 & 0 & 1 & -C_f & -R \\ A_f & B_f & C_f & 0 & 0 \\ P & Q & R & 0 & 0 \end{pmatrix} \begin{pmatrix} A_s \\ B_s \\ C_s \\ s \\ t \end{pmatrix} = \begin{pmatrix} 0 \\ 0 \\ 0 \\ cos\theta \\ cos\alpha \end{pmatrix} \quad \cdots (22)$$

Based on the locations of individual target grinding points $p_g$ and the grindstone attitude vector S that have been determined as described above, the trajectory T0 of the grindstone 11 is generated. The grindstone 11 is then moved along the trajectory T0 while being pressed against the workpiece W to thereby grind the flaw Wf.

An angle grinder is used as the grinder 10 in the present example. A rotation speed 11R of the grindstone 11 of the grinder 10 is set at a suitable value within a range of 1000 rpm to 15000 rpm in accordance with the properties of the grindstone 11, the material of the workpiece W, or other factors. A feed rate 11V of the grindstone 11 is preferably set to be within a range of 50 mm/min to 2000 mm/min.

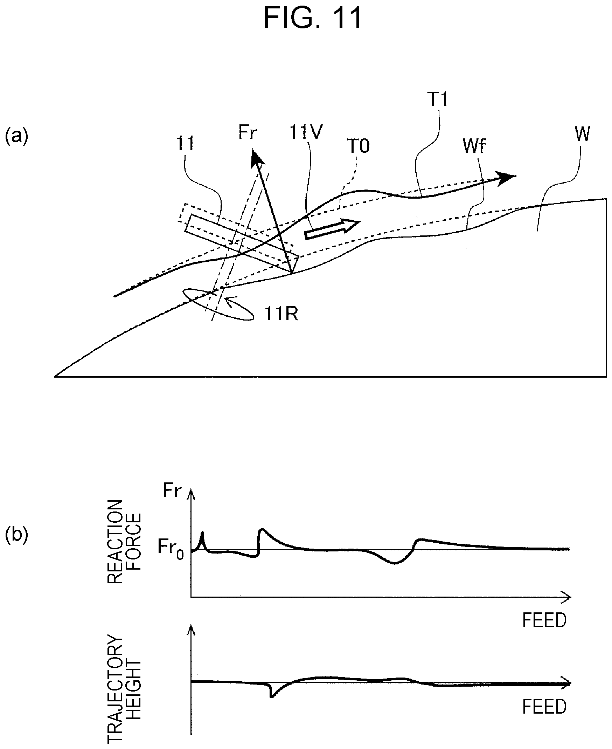

Fig. 11(a) and Fig. 11(b) illustrate correction of the trajectory T0 of the grindstone 11 by the flaw grinding system according to the present example.

The magnitude of a grinding reaction force Fr, which is generated in a direction perpendicular to the feed direction of the grindstone 11 as the grindstone 11 is pressed against the workpiece W, is measured by the reaction-force meter 13 (see Fig. 1). Then, an inverse kinematics calculation for making the grinding reaction force Fr measured by the reaction-force meter 13 approach a predetermined target value $Fr_0$ is sequentially performed by the grinding-tool control PC 20 to correct the trajectory T0 of the grindstone 11, and the grindstone 11 is moved along the corrected trajectory T1. Specifically, when the grinding reaction force Fr measured by the reaction-force meter 13 is above the target value $Fr_0$, the trajectory T0 of the grindstone 11 is corrected so as to make the grindstone 11 cut deeper than expected from the initial trajectory T0, and when the grinding reaction force Fr measured by the reaction-force meter 13 is below the target value $Fr_0$, the trajectory T0 of the grindstone 11 is corrected so as to make the grindstone 11 cut less deeper than expected from the initial trajectory T0. A target value for the grinding reaction force Fr is set within a range of 10 N to 3000 N in accordance with the properties of the grindstone 11, the material of the workpiece W, or other factors. In this way, the trajectory T0 of the grindstone 11 is corrected based on the grinding reaction force Fr measured by the reaction-force meter 13, and the grindstone 11 is moved along the corrected trajectory T1. This allows the flaw Wf and its surroundings to be ground and removed smoothly as if ground manually.

It is also possible to correct the trajectory T0 of the grindstone 11 not by the above-mentioned method in which the magnitude of the grinding reaction force Fr generated perpendicularly to the feed direction of the grindstone 11 is made to approach a target value, but instead by another method in which a value such the direction of the grinding reaction force Fr generated during grinding of the flaw Wf, the counter moment acting on the arm of the grinding robot 21, or the electric current load on the grinder 10 is made to approach a target value.

Although the example described above is directed to a case where the workpiece W is a steel pipe with a diameter of 50 mm to 600 mm and the flaw Wf on the surface of the workpiece W is removed by grinding, this is not intended to limit the application of the flaw grinding system, the flaw grinding method, and the steel-material manufacturing method according to the present invention to the above-mentioned case. For example, the present invention is also applicable to cases where the workpiece W is an H-shaped steel with a web length of 200 mm to 1000 mm, a steel sheet pile with an effective width of 400 mm to 900 mm, or other steel product.

The example described above employs the reaction-force meter (grinding-reaction-force measurement apparatus) 13 that measures the grinding reaction force exerted on the grindstone 11 from the workpiece W. It is to be noted, however, that even in the absence of such a grinding-reaction-force measurement apparatus, the flaw grinding system, the flaw grinding method, and the steel-material manufacturing method according to the present invention provide the above-mentioned effect, that is, enabling automation of the task of grinding a flaw on the surface of a workpiece having a three-dimensional shape, while also reducing the occurrence of faulty grinding such as over-grinding or under-grinding.

According to the example described above, employing the flaw grinding system and the flaw grinding method according to the present invention to grind a flaw on the surface of a steel pipe has made it possible to reassign approximately 50% of workers otherwise required for flaw reworking to other tasks. This in turn has made it possible to relieve the workers from problems including: the potential danger associated with the task of manually performing grinding by placing the grinder's rotor against the workpiece; and the working environment where the workers are exposed to vibrations, dust, or other adverse conditions that arise due to grinding.

Reference Signs List

1 flaw grinding system
10 grinder (grinding apparatus)
11 grindstone (grinding tool)
11X rotation axis
11R rotation speed
12 actuator (grinding-tool control apparatus)
13 reaction-force meter (grinding-reaction-force measurement apparatus)
20 grinding-tool control PC (grinding-tool control apparatus)
21 grinding robot (grinding-tool control apparatus)
31 laser rangefinder (shape measurement apparatus/flaw detection apparatus)
31A to 31C flaw shape data
31D shape data
32 camera (flaw detection apparatus/inspection apparatus)
32D image data
33 uniaxial actuator (shape measurement apparatus/flaw detection apparatus/inspection apparatus)
40 shape measurement/flaw detection control PC (shape measurement apparatus/inspection apparatus)
W workpiece
Wf flaw
Wa grinding range
Fr grinding reaction force
T0 trajectory
T1 corrected trajectory
$L_x$ length of grinding range in x-direction
$L_y$ length of grinding range in y-direction
$\Delta L_x$ interval between target grinding points in x-direction
$\Delta L_x$ interval between target grinding points in y-direction
$p_m$ measured point

$p_0$ measurement origin
$p_g$ target grinding point
$p_{g0}$ grinding origin
$L_{xi}$ location of grinding origin in x-direction
$L_{yi}$ location of grinding origin in y-direction
A virtual plane
n normal vector in virtual plane
f inter-target-grinding-point vector
N non-dimensionalized normal vector in virtual plane
F non-dimensionalized inter-target-grinding-point vector
S grindstone attitude vector

**Claims**

1. A flaw grinding system comprising:

   a grinding apparatus including a grinding tool that grinds a flaw on a surface of a workpiece;
   a shape measurement apparatus that measures a three-dimensional shape and an attitude of the workpiece;
   a flaw detection apparatus that detects a location of the flaw on the workpiece; and
   a grinding-tool control apparatus that, based on the three-dimensional shape and the attitude of the workpiece measured by the shape measurement apparatus and based on the location of the flaw detected by the flaw detection apparatus, generates a trajectory of the grinding tool to grind the flaw, and controls the grinding apparatus in a manner that causes the grinding tool to move along the trajectory.

2. The flaw grinding system according to Claim 1, further comprising

   a grinding-reaction-force measurement apparatus that measures a grinding reaction force, the grinding reaction force being a force exerted on the grinding tool from the workpiece in reaction to grinding,
   wherein the grinding-tool control apparatus corrects the trajectory based on the grinding reaction force measured by the grinding-reaction-force measurement apparatus, and controls the grinding apparatus in a manner that causes the grinding tool to move along the trajectory that has been corrected.

3. The flaw grinding system according to Claim 1 or 2, further comprising an inspection apparatus that, after grinding of the flaw is performed by the grinding apparatus, inspects the surface of the workpiece at the location of the flaw.

4. A flaw grinding method comprising:

   a shape measurement step of measuring a three-dimensional shape and an attitude of a workpiece;
   a flaw detection step of detecting a location of a flaw on a surface of the workpiece; and
   a grinding step of, based on the three-dimensional shape and the attitude of the workpiece measured in the shape measurement step and based on the location of the flaw detected in the flaw detection step, generating a trajectory of a grinding tool that grinds the flaw, and grinding the flaw by moving the grinding tool along the trajectory.

5. The flaw grinding method according to Claim 4, wherein the grinding step includes measuring a grinding reaction force, correcting the trajectory based on the grinding reaction force, and grinding the flaw by moving the grinding tool along the trajectory that has been corrected, the grinding reaction force being a force exerted on the grinding tool from the workpiece in reaction to grinding.

6. The flaw grinding method according to Claim 4 or 5, further comprising an inspection step of, after the grinding step, inspecting the surface of the workpiece at the location of the flaw.

7. A steel-product manufacturing method comprising grinding a flaw on a surface of a steel product by use of the flaw grinding method according to any one of Claims 4 to 6, the steel product being the workpiece.

# FIG. 1

# FIG. 2

# FIG. 3

# FIG. 4

# FIG. 5

# FIG. 6

(a)

(b)

(c)

# FIG. 7

# FIG. 8

$p_{m3} = (x_3, y_3, z_3)$        $p_{m4} = (x_4, y_4, z_4)$

$p_g = (x_g, y_g, z_g)$

$p_{m2} = (x_2, y_2, z_2)$        $p_{m1} = (x_1, y_1, z_1)$

# FIG. 9

# FIG. 10

# FIG. 11

(a)

(b)

**INTERNATIONAL SEARCH REPORT**

| International application No. |
|---|
| **PCT/JP2021/027912** |

| A. | CLASSIFICATION OF SUBJECT MATTER |
|---|---|

***B24B 27/00***(2006.01)i; ***B24B 27/033***(2006.01)i; ***B24B 49/12***(2006.01)i; ***B24B 49/16***(2006.01)i; ***G05B 19/18***(2006.01)i;
***G05B 19/4093***(2006.01)i; ***B23Q 17/24***(2006.01)i
FI: B24B27/033 A; B24B27/00 A; B24B49/12; B24B49/16; G05B19/4093 Z; G05B19/18 W; B23Q17/24 C

According to International Patent Classification (IPC) or to both national classification and IPC

| B. | FIELDS SEARCHED |
|---|---|

Minimum documentation searched (classification system followed by classification symbols)

B24B27/00; B24B27/033; B24B49/12; B24B49/16; G05B19/18; G05B19/4093; B23Q17/24

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 7-237106 A (NIPPON STEEL CORP) 12 September 1995 (1995-09-12)<br>paragraphs [0002]-[0026], fig. 1-3 | 1, 3-4, 6-7 |
| Y | paragraphs [0002]-[0026], fig. 1-3 | 2, 5 |
| Y | JP 2005-305604 A (OKUMA CORP) 04 November 2005 (2005-11-04)<br>paragraphs [0011]-[0013], fig. 1 | 2, 5 |
| Y | JP 3-149171 A (TOYODA MACH WORKS LTD) 25 June 1991 (1991-06-25)<br>page 2, lower left column, line 7 to page 4, upper left column, line 13 | 2, 5 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 September 2021** | **05 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/027912**

| Patent document cited in search report | | | Publication date (day/month/year) | Patent family member(s) | Publication date (day/month/year) |
|---|---|---|---|---|---|
| JP | 7-237106 | A | 12 September 1995 | (Family: none) | |
| JP | 2005-305604 | A | 04 November 2005 | (Family: none) | |
| JP | 3-149171 | A | 25 June 1991 | (Family: none) | |

Form PCT/ISA/210 (patent family annex) (January 2015)

**EP 4 194 144 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7009320 A
- JP 5041388 B
- JP 1166105 A